# EUROPEAN PATENT SPECIFICATION

(11) **EP 2 822 172 B1**
(45) Date of publication and mention of the grant of the patent: **15.11.2017**
(21) Application number: 13755571.0
(22) Date of filing: 24.01.2013
(51) Int. Cl.: H02M 7/797, H02M 5/45, H02M 7/12, H02M 7/48

(54) **POWER CONVERSION DEVICE**
STROMWANDLER
DISPOSITIF DE CONVERSION ÉLECTRIQUE

(30) Priority: 02.03.2012 JP 2012046188
(43) Date of publication of application: 07.01.2015
(73) Proprietor: Daikin Industries, Ltd., Osaka 530-8323 (JP)
(72) Inventor: ISHIZEKI Shinichi, Osaka-shi, Osaka 530-8323 (JP); ISHII Hidehiro, Osaka-shi, Osaka 530-8323 (JP); KOYAMA Takuji, Osaka-shi, Osaka 530-8323 (JP)
(74) Representative: Hoffmann Eitle
(86) International application number: PCT/JP2013/051434
(87) International publication number: WO 2013/128991

(56) References cited:
- EP-A1- 2 262 090
- JP-A- H08 136 590
- JP-A- H11 316 249
- JP-A- 2003 043 075
- JP-A- 2007 295 686
- JP-A- 2011 147 307
- US-A1- 2005 099 829
- LIXIANG WEI ET AL: "Investigation of 9-switch dual-bridge matrix converter operating under low output power factor", CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, vol. 1, 12 October 2003 (2003-10-12), pages 176-181, XP010676020, DOI: 10.1109/IAS.2003.1257500 ISBN: 978-0-7803-7883-4
- DIPANKAR DE ET AL: "Analysis, Design, Modeling, and Implementation of an Active Clamp HF Link Converter", IEEE TRANSACTIONS ON CIRCUITS AND SYSTEMS I: REGULAR PAPERS, IEEE, US, vol. 58, no. 6, 1 June 2011 (2011-06-01), pages 1446-1455, XP011325574, ISSN: 1549-8328, DOI: 10.1109/TCSI.2010.2097714

## Description

### Technical Field

The present invention relates to a power conversion device.

### Background Art

In an indirect matrix converter, for example, a current source converter having reverse blocking, and a voltage source inverter are connected to each other through a DC link. In such an indirect matrix converter, a clamp circuit is provided in the DC link in order to allow a regenerative current from the inverter to flow. For example, the clamp circuit has a capacitor and a diode connected in series with each other, and has the same configuration as a DC snubber.

As a technology related to the present invention, Patent Document 1 is disclosed.

Further, EP 2 262 090 A1 discloses a power conversion device wherein a converter and an inverter are connected via a clamp circuit. The converter performs commutation in accordance with any of a first commutation mode in which trapezoidal waves are compared with a carrier and a 120-degree conduction mode. A diode of the clamp circuit is short-circuited by a shorting switch. The shorting switch is rendered conductive when a power factor reduces or a power supply voltage reduces, and capacitors and of the clamp circuit are connected in series between DC power supply lines. The converter performs commutation in accordance with the 120-degree conduction mode, not in accordance with the first commutation mode, while the shorting switch is conductive.

### Prior Art Document

### Patent Document

Patent Document 1: Japanese Patent Application Laid-Open No. 2011-15604

### Summary of Invention

### Problems to be Solved by the Invention

However, when a regenerative current flows, the capacitor of the clamp circuit is charged, and a voltage across the capacitor increases. The voltage across the capacitor increases, so that overvoltage can be applied to the inverter and the converter.

An object of the present invention is provide a power conversion device that is capable of suppressing increase in a DC voltage due to a regenerative current.

### Means for Solving the Problems

A power conversion device according to the present invention is defined by the combination of features of claim 1. Dependent claims relate to preferred embodiments.

A first aspect of a power conversion device according to the present invention includes: an inverter (3) converting a DC voltage applied between a first power line (LH) on a positive electrode side and a second power line (LL) on a negative electrode side into an AC voltage, and apply the AC voltage to an inductive load (6); a capacitor (C1) provided between the first and the second power lines; a diode (D1) connected in series with the capacitor between the first and the second power lines, and having an anode on a side close to the first power line in a series path with the capacitor; a switch element (S1) connected in parallel with the diode; a current detection unit (4) detecting a regenerative current that flows from the first power line to the second power line and the inverter (3) via the capacitor; and a switching controller (51) having a function of controlling the inverter and the switch element, and making the switch element (S1) conductive with a fact that the regenerative current is larger than a predetermined value (Iref1) as a trigger, in a state where the inverter applies the AC voltage to the inductive load.

A second aspect of the power conversion device according to the present invention is the power conversion device according to the first aspect, wherein the current detection unit (4) detects a current that flows through the first or the second power line (LH, LL) while defining a direction in which the regenerative current flows as a negative direction, and add a predetermined offset amount (ΔI) having a positive value to the detected current, to output the added current to the switching controller, and the switching controller (51) makes the switch element conductive with a fact that the current from the current detection unit is smaller than a second predetermined value (Iref11) that is a difference between the predetermined offset amount and the predetermined value (Iref1) as a trigger.

A third aspect of the power conversion device according to the present invention is the power conversion device according to the second aspect, wherein the switching controller (51) stops the inverter with a fact that the current from the current detection unit is larger than a third predetermined value (Iref21) larger than the predetermined offset amount (ΔI) as a trigger.

A fourth aspect of the power conversion device according to the present invention is the power conversion device according to the first aspect, wherein the current detection unit (4) detects a current that flows through the first or the second power line (LH, LL) while defining a direction in which the regenerative current flows as a positive direction, and add a predetermined offset amount (ΔI) having a positive value to the detected current, to output the added current to the switching controller, and the switching controller (51) is makes the switch element conductive with a fact that the current from the current detection unit is larger than a second predetermined value (Iref11) which is a sum of the predetermined offset amount and the predetermined value (Iref1) as a trigger.

A fifth aspect of the power conversion device according to the present invention is the power conversion device according to the fourth aspect, wherein the switching controller (51) stops the inverter with a fact that the current from the current detection unit is smaller than a third predetermined value (Iref21) smaller than the predetermined offset amount (ΔI) as a trigger.

A sixth aspect of the power conversion device according to the present invention is the power conversion device according to any one of the second to fifth aspects, wherein the current detection unit (4) has a shunt resistor (41) provided in the first or second power line (LH, LL), and detects a potential of other end with respect to a potential of one end of the shunt resistor as a current that flows through the first or the second power line, and add the predetermined offset amount to the current by detecting the potential of the other end with respect to a potential smaller than the potential of the one end of the shunt resistor.

A seventh aspect of the power conversion device according to the present invention is the power conversion device according to any one of the first to sixth aspects, and further includes: a second capacitor (C2) connected in series with the capacitor and the diode in the series path; a second diode (D2) provided between a point between the capacitor and the diode, and the second power line, and having an anode on a side close to the second power line; and a third diode (D3) provided between a point between the second capacitor and the diode, and the first power line, and having a cathode on a side close to the first power line, wherein the switching controller (51) makes the switch element non-conductive, when a maximum value of the regenerative current in a period equal to or longer than a period obtained by dividing a cycle of the AC voltage by a product of the number of output phases of the inverter and 2 is smaller than a fourth predetermined value which is equal to or less than the predetermined value.

### Effects of the Invention

According to the first aspect of the power conversion device according to the present invention, when a load power factor of the inductive load reduces, the regenerative current increases. The switch element is made conductive with a fact that the regenerative current is larger than the predetermined value as a trigger, so that charges of the capacitor in which a voltage across the capacitor increases due to the regenerative current can be discharged, when a power running current (current that flows from the first power line (LH) to the second power line (LL) via the inverter) thereafter flows. Accordingly, it is possible to suppress the increase of the voltage across the capacitor when the load power factor is low.

According to the second aspect of the power conversion device according to the present invention, the offset amount is added to the current, and therefore a regenerative current whose amount is smaller than the offset amount can be detected as a positive value. Accordingly, it is possible to employ a switching controller that handles a current in a positive area.

According to the third aspect of the power conversion device according to the present invention, the inverter can be stopped with a fact that a power running current is large as a trigger, while the both the regenerative current and the power running current are detected. That is, the inverter can be protected from an overcurrent by suitably setting the third predetermined value.

According to the fourth aspect of the power conversion device according to the present invention, the offset amount is added to the current, and therefore a power running current whose amount is smaller than the offset amount can be detected as a positive value. Accordingly, it is possible to employ a switching controller that handles a current in a positive area.

According to the fifth aspect of the power conversion device according to the present invention, the inverter can be stopped with a fact that a power running current is large as a trigger, while the both the regenerative current and the power running current are detected. That is, the inverter can be protected from an overcurrent by suitably setting the third predetermined value.

According to the sixth aspect of the power conversion device according to the present invention, in a voltage of the shunt resistor generated by a power running current and a regenerative current, an end of the shunt resistor having a high potential is different depending on the power running current and the regenerative current. In other words, while positive and negative of the potential of the other end with respect to the reference potential of the one end of the shunt resistor are different, the reference potential is offset, and therefore the switching controller can handle potentials having positive values as potentials by the regenerative current and the power running current.

According to the seventh aspect of the power conversion device according to the present invention, the capacitor can be made to function as a clamp capacitor, when the regenerative current is small.

These and other objects, features, aspects and advantages of the present invention will become more apparent from the following detailed description of the present invention when taken in conjunction with the accompanying drawings.

### Brief Description of Drawings

Fig. 1 is a diagram showing an example of a conceptual configuration of a power conversion device;
Fig. 2 is a diagram showing an example of a phase voltage and line currents;
Fig. 3 is a diagram showing a detected current and a current after offset;
Fig. 4 is a diagram showing a detected current and a current after offset;
Fig. 5 is a diagram showing an example of a conceptual configuration of the controller;
Fig. 6 is a diagram showing a detected current and a current after offset;
Fig. 7 is a diagram showing a conceptual example of a clamp circuit; and
Fig. 8 is a diagram showing a conceptual example of a clamp circuit.

### Description of Embodiment

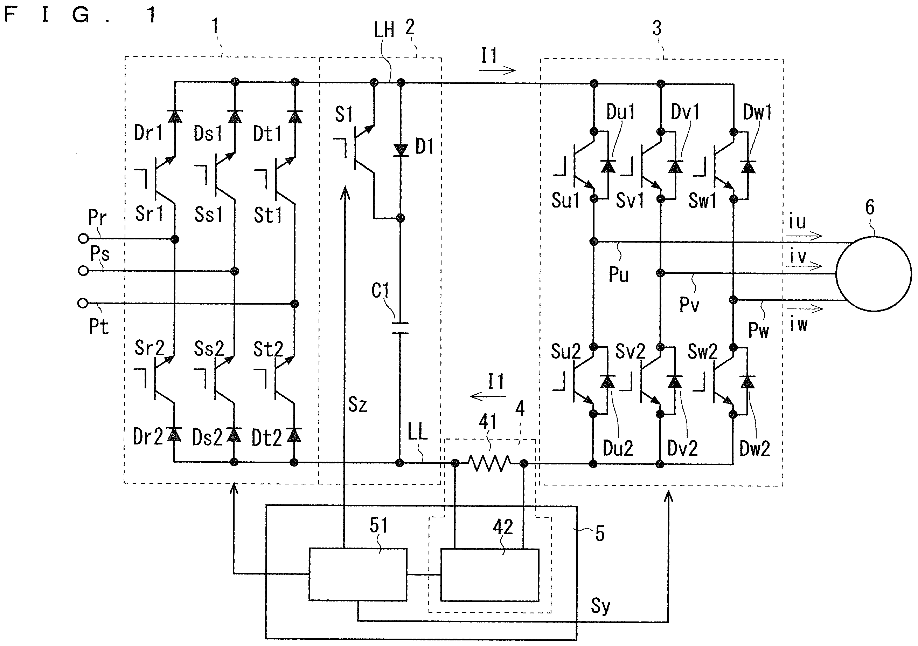

As shown in Fig. 1, this power conversion device includes a clamp circuit 2 and an inverter 3. The inverter 3 is connected to power lines LH and LL on the input side thereof. Between the power lines LH and LL, a DC voltage is applied. Herein, a potential applied to the power line LH is higher than a potential applied to the power line LL. The inverter 3 converts this DC voltage into an AC voltage, and applies the AC voltage to AC lines Pu, Pv and Pw.

In an example of Fig. 1, the inverter 3 is, for example, a three-phase inverter. However, the inverter 3 is not limited to this, and may be a single-phase inverter, or three or more phase inverter. The following description covers a case in which the inverter 3 is a three-phase inverter. The inverter 3 includes, for example, switching elements Su1, Sv1, Sw1, Su2, Sv2 and Sw2, and diodes Du1, Dv1, Dw1, Du2, Dv2 and Dw2. The switching elements Sy1 and Sy2 (y represents u, v and w) are, for example, an insulated gate bipolar transistor, etc. The switching elements Sy1 and Sy2 are connected in series with each other between the power lines LH and LL. The AC line Py is drawn out from a point between the switching elements Sy1 and Sy2. The diodes Dy1 and Dy2 are connected in parallel with the switching elements Sy1 and Sy2, respectively, and anodes of the diodes Dy1 and Dy2 are provided toward the power line LL.

These switching elements Sy1 and Sy2 are suitably controlled by a controller 5 described later. By this control, the inverter 3 can convert the DC voltage between the power lines LH and LL into the AC voltage, and apply this AC voltage to the AC lines Pu, Pv and Pw. While such control is a well-known technology, and therefore detailed description thereof will be omitted, an example thereof will be briefly described.

The switching elements Sy1 and Sy2 are made exclusively conductive with each other. This prevents the short circuit of the power lines LH and LL due to the simultaneous conduction of the both of the switching elements Sy1 and Sy2. As a switching pattern of the switching elements Sy1 and Sy2, for example, the following 8 types of switching patterns are employed. Herein, "1" denotes making the switching element Sy1 conductive, and "0" denotes making the switching element Sy2 conductive. When the switching pattern is represented by arranging figures for the respective phases, the switching patterns are 8 types of switching patterns, namely (000), (001), (010), (011), (100), (101), (110) and (111). For example, the switching pattern of making the switching elements Su1, Sv2 and Sw2 conductive is (100). Additionally, a vector of a voltage (hereinafter, referred to as a voltage vector) applied to each of the AC lines Pu, Pv and Pw when each switching pattern is employed is expressed as voltage vectors V0 to V7 by grasping the above figures as binary digit and converting this into decimal digit. For example, when the switching pattern (100) is employed, the voltage vector is the voltage vector V4.

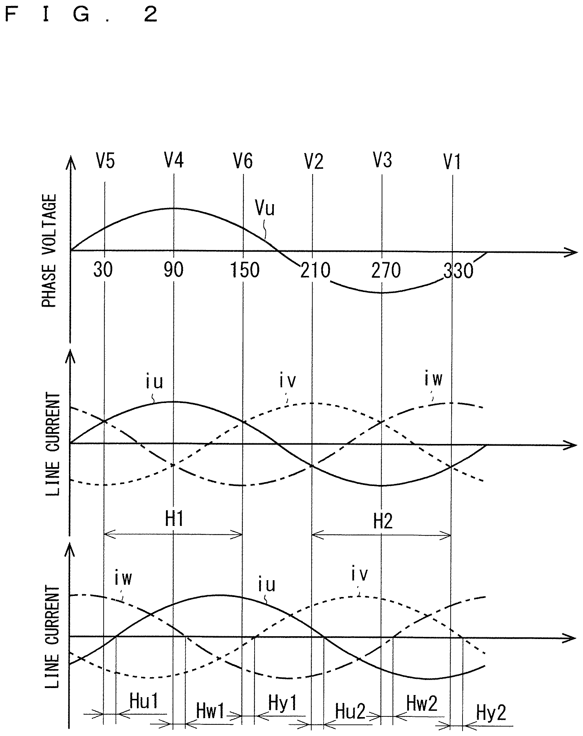

The 8 types of switching patterns are suitably switched, so that the inverter 3 can output AC voltages to the AC lines Pu, Pv and Pw. For example, with reference to Fig. 2, for example, in a 60 degree section between a voltage phase of 30 degrees and a voltage phase of 90 degrees, the voltage vectors V5 and V4, and voltage vector V0 (or V7, or V0 and V7, the same applies hereafter) are repeatedly switched and employed. Additionally, for example, in a 60 degree section between a voltage phase of 90 degrees and a voltage phase of 150 degrees, the voltage vectors V4 and V6, and the voltage vector V0 are repeatedly switched and employed.

In the example of Fig. 2, a reference character of the voltage vector is added to each boundary of the 60 degree section, which indicates that these voltage vectors are employed in the 60 degree sections sandwiched between the boundaries. For example, in a 60 degree section between a voltage phase of 210 degrees and a voltage phase of 270 degrees, the voltage vectors V2 and V3 are employed. Note that the voltage vector V0 can be employed in all 60 degree sections, and therefore is not shown in Fig. 2.

The duty of the voltage vector employed in each area (rate of each voltage vector in predetermined time (for example, a carrier cycle)) is suitably adjusted, so that the inverter 3 can suitably output an AC voltage that is approximated to a sine wave. In the example of Fig. 2, an approximate value of a phase voltage Vu applied to the AC line Pu is shown by the sine wave as an example.

The above control is an example, and other control may be employed. For example, in a section between a voltage phase of 0 degree and a voltage phase of 60 degrees, only the voltage vector V5 may be employed, and the voltage vectors V4, V6, V2, V3 and V1 may be employed in this order every subsequent 60 degree section. This is control performed in a case of employing, as the phase voltage Vu, a rectangular wave in which a high potential is taken in a section between a voltage phase of 0 degrees and a voltage phase of 180 degrees, and a low potential is taken in a section from 180 degrees to 360 degrees.

Referring to Fig. 1 again, the AC lines Pu, Pv and Pw are connected to an inductive load 6. The inductive load 6 is, for example, a motor, and rotates in accordance with AC voltages applied to the AC lines Pu, Pv and Pw.

The clamp circuit 2 includes a diode D1, a capacitor C1 and a switch element S1. The capacitor C1 is provided between the power lines LH and LL. The diode D1 is connected in series with the capacitor C1 between the power lines LH and LL. The diode D1 has an anode disposed toward the power line LH in a series path with the capacitor C1. The switch element S1 is, for example, an insulated gate bipolar transistor, etc, and is connected in parallel with the diode D1. The switch element S1 is also controlled by the controller 5 described later.

When the switch element S1 is made non-conductive, the diode D1 connected in parallel with the switch element S1 functions. The diode D1 prevents the capacitor C1 from discharging to the power line LH, and therefore a voltage across the capacitor C1 is maintained at a maximum value of the DC voltage between the power lines LH and LL. That is, the capacitor C1 functions as a so-called clamp capacitor. At this time, the clamp circuit 2 can also function as a so-called DC snubber.

On the other hand, when the switch element S1 is made conductive, the capacitor C1 can discharge to the power line LH through the switch element S 1. That is, the capacitor C1 can function as a so-called smoothing capacitor.

In the example of Fig. 1, a converter 1 is shown as a configuration of applying a DC voltage between the power lines LH and LL. The converter 1 converts the AC voltage from an AC power supply into a DC voltage, and applies this DC voltage to the power lines LH and LL. In the example of Fig. 1, the converter 1 is, for example, a current source converter, and has, for example, diodes Dr1, Dr2, Ds1, Ds2, Dt1 and Dt2, and switching elements Sr1, Sr2, Ss1, Ss2, St1 and St2.

The switching elements Sx1 and Sx2 (hereinafter, x represents r, s and t) are, for example, an insulated gate bipolar transistor. The diode Dx1 and the switching element Sx1 are connected in series with each other between the AC line Px and the power line LH. The diode Dx1 has a cathode disposed toward the power line LH. That is, the diodes Dr1, Ds1 and Dt1 prevent a current from flowing from the power line LH to the AC lines Pr, Ps and Pt through the switching elements Sr1, Ss1 and St1, respectively.

The diode Dx2 and the switching element Sx2 are connected in series with each other between the AC line Px and the power line LL. The diode Dx2 has an anode disposed toward the power line LL. That is, the diodes Dr2, Ds2 and Dt2 prevent a current from flowing from the AC lines Pr, Ps and Pt to the power line LL through the switching elements Sr2, Ss2 and St2, respectively.

These switching elements Sx1 and Sx2 are suitably controlled by the controller 5. More specifically, for example, the switching elements Sx1 and Sx2 are controlled on the basis of an AC voltage applied to the AC line Px. Consequently, the converter 1 can convert the AC voltages applied to the AC lines Pr, Ps and Pt into DC voltage, and apply the DC voltage between the power lines LH and LL.

In the example of Fig. 1, the switching elements Sx1 and Sx2 and the diodes Dx1 and Dx2 are provided. However, the present invention is not limited to this. For example, in place of a set of the diode Dx1 and the switching element Sx2 and/or a set of the diode Dx2 and the switching element Sx2, a reverse blocking switching element excellent in resistance to a reverse voltage (such as RB-IGBT (reverse blocking insulated gate bipolar transistor)) may be employed.

The power conversion device is provided with a current detection unit 4. The current detection unit 4 detects a current that flows from the inverter 3 to the power line LL via the power line LH, the diode D1 (or the switch element S1) and the capacitor C1, namely a regenerative current from the inverter 3.

In the example of Fig. 1, the current detection unit 4 detects a current that flows through the power line LL between the clamp circuit 2 and the inverter 3. The current detection unit 4 may detect a current that flows through the power line LH between the clamp circuit 2 and the inverter 3. The current detection unit 4 detects the regenerative current in distinction from a current that flows from the power line LH to the power line LL via the inverter 3 (hereinafter also referred to as a power running current). An example of a specific configuration of the current detection unit 4 will be later described in detail.

The controller 5 includes a switching controller 51. The switching controller 51 has a function of controlling the inverter 3. That is, the switching controller 51 outputs a switching signal Sy to the switching elements Sy1 and Sy2 in order to control the inverter 3 as described above, for example.

Additionally, the switching controller 51 has a function of controlling the switch element S 1. That is, the switching controller 51 outputs a switching signal Sz to the switch element S 1.

Herein, the controller 5 includes a microcomputer and a storage device. The microcomputer performs each of processing steps (i.e., processes) described in a program. The above storage device can be configured by one of or a plurality of various storage devices such as a ROM (Read-Only-Memory), a RAM (Random-Access-Memory), a rewritable nonvolatile memory (EEPROM (Electrically-Erasable-Programmable-ROM) or the like) and hard disk drive. The storage device stores various information, data, and the like, stores programs performed by the microcomputer, and provides a working area for performing the programs. The microcomputer can also grasp functions as various means corresponding to the respective processing steps described in the programs, or can also grasp the implementation of various functions corresponding to the respective processing steps. The controller 5 is not limited to this, and a part of or all of the various processes performed by the controller 5, or a part of or all of the various means or the various functions implemented by the controller 5 may be implemented by hardware.

In a state where the switching controller 51 outputs the switching signal Sy to cause the inverter 3 to output an AC voltage, the switching controller 51 makes the switch element S1 conductive with a fact that a regenerative current detected by the current detection unit 4 is larger than a predetermined value Iref1 as a trigger.

Before an effect by such control of the switch element S1 is described, a relation between currents that flow through the power lines LH and LL, and a power factor on the inductive load 6 side (hereinafter referred to as a load power factor) is first described. In order to describe this relation, a relation between line currents iu, iv and iw which flow through the AC lines Pu, Pv and Pw, and currents which flow through the power lines LH and LL is also described. Hereinafter, a direction of each line current that flows from the inverter 3 to the inductive load 6 is defined as a positive direction.

As shown in a graph of the center of Fig. 2, a case where the phases of the phase voltage Vu and the line current iu are equal to each other, namely the load power factor is 1 will be considered. As understood from Fig. 2, the voltage vector V4 is suitably employed in a 120 degree section H1 between a voltage phase of 30 degrees and a voltage phase of 150 degrees. When the voltage vector V4 is employed, the switching element Su1 is made conductive. On the other hand, the phases of the phase voltage Vu and the line current iu are equal to each other, and therefore the line current iu is positive in this 120 degree section H1. Accordingly, when the voltage vector V4 is employed in this 120 degree section H1, the line current iu flows through the AC line Pu from the power line LH via the switching element Su1 in the positive direction (see also Fig. 1). That is, the line current iu flows as a power running current.

As shown in a graph on the lower side of Fig. 2, a case where a phase difference between the phase voltage Vu and the line current iu exceeds 30 degrees, namely, the load power factor is below √3/2 will be considered. At this time, in an initial section Hu1 of the 120 degree section H1, the line current iu is negative. On the other hand, when the voltage vector V4 is employed, the switching element Su2 is non-conductive. Accordingly, when the voltage vector V4 is employed in this section Hu1, the line current iu flows from the AC line Pu to the power line LH via the diode Du1 (see also Fig. 1). When the voltage vector V4 is employed, the switching elements Sv1 and Sw1 are non-conductive, and therefore the current that passes through the diode Du1 does not flow toward the inductive load 6, but flows toward the clamp circuit 2. That is, a regenerative current flows.

In an initial section Hw1 of a 120 degree section between a voltage phase of 90 degrees and a voltage phase of 210 degrees, in which the voltage vector V6 is suitably employed, the line current iw is positive. When the voltage vector V6 is employed, the switching element Sw1 is non-conductive. Therefore, when the voltage vector V6 is employed in the section Hw1, the line current iw flows into the AC line Pw from the power line LL through the diode Dw2 in the positive direction (see also Fig. 1). When the voltage vector V6 is employed, the switching elements Su2 and Sv2 are non-conductive. Therefore, currents that flow through these elements do not flow into the diode Dw2 through the power line LL, a current that passes through the clamp circuit 2 flows through the diode Dw2 via the power line LL. That is, a regenerative current flows.

When predetermined voltage vectors are similarly employed in other sections Hu2, Hy1, Hy2 and Hw2, a regenerative current flows.

Each time such a regenerative current flows, the regenerative current flows through the capacitor C1 and the capacitor C1 is charged. Consequently, the voltage across the capacitor C1 increases. However, in the present embodiment, the switching controller 51 makes the switch element S1 conductive with a fact that the regenerative current detected by the current detection unit 4 is larger than the predetermined value Iref1 as a trigger. Accordingly, even when the capacitor C1 is charged due to the flowing of the regenerative current, the capacitor C1 can be made to discharge during a subsequent period when a power running current flows. Therefore, it is possible to suppress increase in the voltage across the capacitor C1 resulting from reduction in the load power factor.

While the regenerative current resulting from the reduction in the load power factor is described in the above example, no consideration of a factor of causing a regenerative current to flow is taken. This is because, even when any factor causes a regenerative current to flow, it is possible to suppress increase in a DC voltage due to the regenerative current in the present embodiment.

### <Current Detection Unit 4>

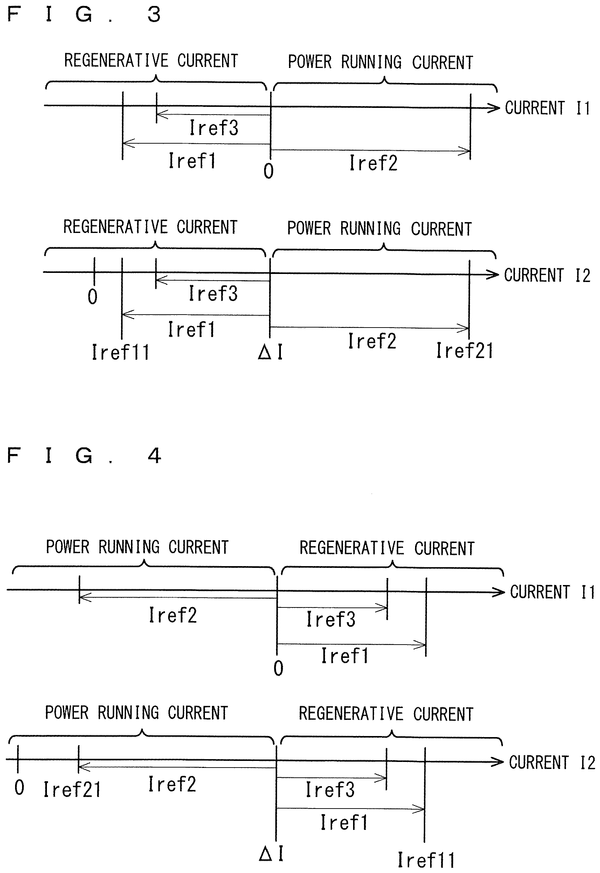

The current detection unit 4 detects a current I1 that flows through the power lines LH or LL in accordance with the direction. More specifically, as shown in Fig. 3, the current detection unit 4 detects a regenerative current as a negative value, and detects a power running current as a positive value. Accordingly, the larger the regenerative current is, the smaller a value employed as the current I1 is. Then, the current detection unit 4 adds an offset amount ΔI having a positive value to the detected current I1. The offset amount ΔI is a value larger than the predetermined value Iref1. In an example of Fig. 3, a value obtained by adding the offset amount ΔI to the current I1 is expressed as a current I2. Accordingly, the regenerative current is detected as a value smaller than the offset amount ΔI in the current I2. The current detection unit 4 outputs the current I2 to the switching controller 51.

The switching controller 51 makes the switch element S1 conductive with a fact that the current I2 from the current detection unit 4 is smaller than a predetermined value Iref11 as a trigger. It is to be noted that the predetermined value Iref11 is a difference between the offset amount ΔI and the predetermined value Iref1. Accordingly, the fact that current I2 is smaller than the predetermined value Iref11 means the regenerative current is larger than the predetermined value Iref1.

As described above, the offset amount ΔI is added to the current I1, and therefore a regenerative current whose amount is smaller than the offset amount ΔI can be detected as a positive value. Accordingly, as the switching controller 51, a controller that handles a current in a positive area can be employed. That is, the switching controller 51 can compare the regenerative current with the predetermined value Iref1 by the comparison of the positive current I2 with the positive predetermined value Iref11. A specific example of the current detection unit 4 and the switching controller 51 described above will be later described in detail.

The switching controller 51 may stop the inverter 3 with a fact that the current I2 is larger than a predetermined value Iref21 as a trigger. The predetermined value Iref21 is larger than the offset amount ΔI. Consequently, the inverter 3 is stopped with a fact that the power running current is larger than a preset predetermined value Iref2 (= predetermined value Iref21 - offset amount ΔI) as a trigger. Accordingly, the predetermined value Iref21 (predetermined value Iref2) is set to an appropriate value, so that an overcurrent can be prevented from flowing through the inverter 3.

As described above, both the comparison of the power running current with the predetermined value Iref2 for detecting an overcurrent of the inverter 3, and the comparison of the regenerative current with the predetermined value Iref1 for detecting the increase of a regenerative current can be implemented in the positive area. Therefore, as the switching controller 51, a controller that handles a current in the positive area can be employed.

It is to be noted that the switching controller 51 may perform arbitrary control based on the power running current detected by the current detection unit 4, for the converter 1 and/or the inverter 3. For example, a line current that flows through the inductive load 6 may be detected on the basis of the power running current, and the converter 1 and/or the inverter 3 may be controlled on the basis of the line current such that efficiency is maximized. Additionally, control of reducing a load of the inductive load 6 (drooping control, for example, control of reducing a rotational speed) may be performed for the converter 1 and/or the inverter 3 with a fact that the power running current exceeds the predetermined value as a trigger, or the inductive load 6 may be stopped (stop control). Such control is a well-known technology, and therefore detailed description thereof will be omitted.

The regenerative current does not always need to be detected as a negative value, and may be detected as a positive value as shown in Fig. 4. In this case, the current detection unit 4 adds predetermined offset amount ΔI (> predetermined value Iref2) to the current I1 to calculate the current I2, and the switching controller 51 simply makes the switch element S1 conductive when the current I2 is larger than the predetermined value Iref11 (= ΔI + Iref1). Additionally, the switching controller 51 may stop the inverter 3 when the current I2 is smaller than the predetermined value Iref21 (= ΔI - Iref2).

### <Specific Example of Current Detection unit 4>

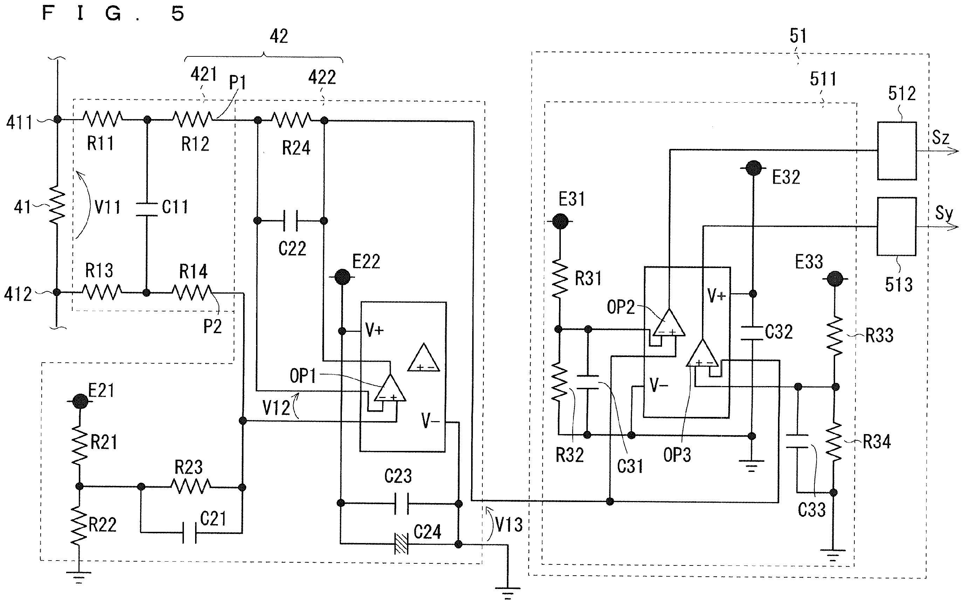

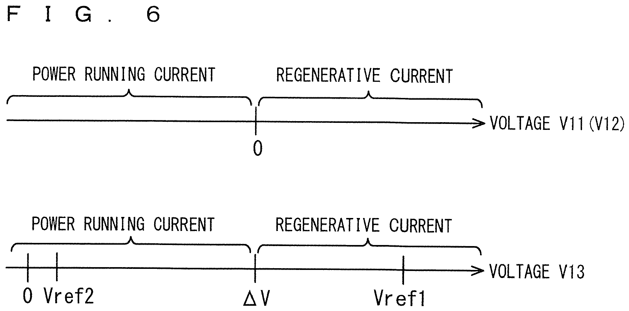

As shown in Figs. 1 and 5, the current detection unit 4 includes a shunt resistor 41 and a voltage detection unit 42. The shunt resistor 41 is provided in, for example, the power line LL between the clamp circuit 2 and the inverter 3. The shunt resistor 41 may be provided in the power line LH between the clamp circuit 2 and the inverter 3. The following description covers a case where the shunt resistor 41 is provided in the power line LL. A voltage across the shunt resistor 41 is ideally proportional to the current I1 that flows through the shunt resistor 41. Accordingly, the voltage detection unit 42 detects a voltage V11 across the shunt resistor 41, in place of the current I1. Herein, as an example, a potential of other end with respect to a potential of one end on a side close to the inverter 3 of the shunt resistor 41 is detected as the voltage across the shunt resistor 41. Accordingly, as shown in Fig. 6, when a regenerative current flows, the voltage V11 across the shunt resistor 41 takes a positive value, and when a power running current flows, the voltage V11 across the shunt resistor 41 takes a negative value.

Fig. 5 shows an example of a conceptual configuration of an inner configuration of the voltage detection unit 42. It is to be noted that one end 412 of the shunt resistor 41 is an end on a side close to the inverter 3, and the other end 411 of the shunt resistor 41 is an end on a side close to the clamp circuit 2.

A harmonic component of the voltage V11 across the shunt resistor 41 is removed by, for example, a low pass filter 421 as shown in Fig. 5. In an example of Fig. 5, the low pass filter 421 includes resistors R11 to R14 and a capacitor C11. The resistors R11 and R12 are connected in series with each other, and the resistors R13 and R14 are connected in series with each other. The capacitor C11 is provided between a connecting point between the resistors R11 and R12, and a connecting point between the resistors R13 and R14. One end on an opposite side to the resistor R12 of the resistor R11 is connected to the other end 411 of the shunt resistor 41, and one end on an opposite side to the resistor R14 of the resistor R13 is connected to the one end 412 of the shunt resistor 41. A voltage V12 between one end P1 on an opposite side to the resistor R11 of the resistor R12 and one end P2 on an opposite side to the resistor R13 of the resistor R14 is an output voltage of the low pass filter 421. It is to be note that the low pass filter 421 is not an essential requirement.

The voltage V12 from the low pass filter 421 is amplified while being offset by the offset amplifier 422, and is outputted to the switching controller 51 as a voltage V 13. However, the voltage does not always need to be amplified. In short, a predetermined offset amount ΔV having a positive value is simply added to the voltage V12. Consequently, as shown in Fig. 6, even when the voltage V11 across the shunt resistor by the power running current takes a negative value, in the case where an absolute value thereof is smaller than the offset amount ΔV, the voltage V 13 outputted from the offset amplifier 422 takes a positive value. Accordingly, even when the regenerative current flows, or even when the power running current flows, the switching controller 51 can handle the voltage V13 in which a current value thereof is reflected, in the positive area. Hereinafter, a specific example of the offset amplifier 422 will be described in detail.

In the example of Fig. 5, the offset amplifier 422 includes an operational amplifier OP1, resistors R21 to R24, and capacitors C21 to C24. The operational amplifier OP1 receives the input of a DC power supply E22 to be operated. The capacitors C23 and C24 are connected in parallel with the DC power supply E22, and, for example, a DC voltage of the DC power supply E22 is smoothed (stabilized). Ends P1 and P2 that serve as output ends of the low pass filter 421 are connected to an inverting input terminal and a non-inverting input terminal of the operational amplifier OP1, respectively. The resistor R23 and the capacitor C21 are connected in parallel with each other, and one end of the parallel connection body is connected to the non-inverting input terminal. The resistors R21 and R22 are connected in series with each other between a DC power supply E21 and the ground, and a connecting point between these is connected to the other end of the parallel connection body configured by the resistor R23 and the capacitor C21. It is to be noted that the resistor R22 is disposed on a side close to the ground with respect to the resistor R21. The resistor R24 is provided between an output terminal and the inverting input terminal of the operational amplifier OP1, and the capacitor C22 is connected in parallel with the resistor R24. The offset amplifier 422 outputs the voltage V13 between the output terminal of the operational amplifier OP1 and the ground.

The voltage V12 input to such an offset amplifier 422 is multiplied by a gain determined by a resistance value of the resistor R24, a resistance value of the resistor R23, and the like, further offset by an amount of a voltage generated in the resistor R22, and output as the voltage V 13 to the switching controller 51.

In short, the offset operation of the offset amplifier 422 is simply implemented as follows. That is, the offset amplifier 422 simply detects a potential of the other end 411 with respect to a reference potential (for example, the ground) that is lower than a potential of one end 412 of the shunt resistor 41, and outputs the detected potential as the voltage V 13. At this time, a difference between the reference potential and the potential of one end 412 is simply set as described below, for example. That is, for example, when the power running current most greatly flows, the voltage V 11 (potential difference of the other end 411 with respect to one end 412) has a negative value, and becomes the smallest. Accordingly, the difference between the reference potential and the potential of one end 412 is set to be larger than an absolute value of the smallest voltage V11. Consequently, it is possible to output a positive value as the voltage V 13, even when the power running current most greatly flows.

In the example of Fig. 5, when a regenerative current flows, the voltage V11 across the shunt resistor 41 takes a positive value, and when a power running current flows, the voltage V11 across the shunt resistor 41 takes a negative value. Accordingly, when the power running current most greatly flows, the voltage V11 has a negative value, and becomes the smallest. On the other hand, the voltage detection unit 42 may be configured such that when the power running current flows, the voltage V11 across the shunt resistor 41 takes a positive value, and when the regenerative current flows, the voltage V11 takes a negative value. One end 412 of the shunt resistor 41 is simply connected to the converter 1 inversely to a case where the regenerative current is positive. At this time, when the regenerative current most greatly flows, the voltage V11 has a negative value, and becomes the smallest. Therefore, a difference between the reference potential and the potential of one end 412 is set to be larger than the absolute value of the smallest voltage V11. Consequently, it is possible to output a positive value as the voltage V 13, even when the regenerative current most greatly flows.

The switching controller 51 includes a comparison unit 511, and switch signal output units 512 and 513. The comparison unit 511 receives the input of the voltage V13, and compares the voltage V13 with a predetermined value Vref1 (> offset amount ΔV). When the voltage V13 is larger than the predetermined value Vref1, the comparison unit 511 outputs this information to the switch signal output unit 512. The fact that the voltage V13 is larger than the predetermined value Vref1 means the regenerative current is larger than the predetermined value Iref1. The comparison unit 511 compares the voltage V13 with a predetermined value Vref2 (< offset amount ΔV). When the voltage V13 is smaller than the predetermined value Vref2, the comparison unit 511 outputs this information to the switch signal output unit 513. The fact that the voltage V13 is smaller than the predetermined value Vref2 means the power running current is larger than the predetermined value Iref2.

In the example of Fig. 5, the comparison unit 511 includes comparators OP2 and OP3, resistors R31 to R34, and capacitors C31 to C33. The comparator OP2 receives the input of the voltage V13 and the predetermined value Vref1, and compares these. The predetermined value Vref1 is generated by the resistors R31 and R32, and the capacitor C31. The resistors R31 and R32 are connected in series with each other between a DC power supply E31 and the ground. The resistor R32 is disposed on a side close to the ground with respect to the resistor R31. The capacitor C31 is connected in parallel with the resistor R32. The capacitor C31 smoothes (stabilizes) a voltage generated in the resistor R32. To the comparator OP2, a connecting point between the resistors R31 and R32 is inputted, and the voltage generated in the voltage resistor R32 is inputted as the predetermined value Vref1. When the voltage V13 is larger than the predetermined value Vref1, the comparator OP2 notifies the switch signal output unit 512 of this information.

The comparator OP3 receives the input of the voltage V13 and the predetermined value Vref2, and compares theses. The predetermined value Vref2 is generated by the resistors R33 and R34, and the capacitor C33. The resistors R33 and R34 are connected in series with each other between a DC power supply E33 and the ground. The resistor R34 is disposed on a side close to the ground with respect to the resistor R33. The capacitor C33 is connected in parallel with the resistor R34. The capacitor C33 smoothes (stabilizes) a voltage generated in the resistor R34. To the comparator OP3, a connecting point between the resistors R33 and R34 is inputted, and the voltage generated in the voltage resistor R34 is inputted as the predetermined value Vref2. When the voltage V13 is smaller than the predetermined value Vref2, the comparator OP3 notifies the switch signal output unit 513 of this information.

In Fig. 5, the comparators OP2 and OP3 are configured as a single integrated circuit, and a DC power supply E32 is connected to the integrated circuit. The capacitor C32 is connected in parallel with the DC power supply E32, and smoothes (stabilizes) a DC voltage of the DC power supply E32, for example.

When receiving notice that the voltage V13 is larger than the predetermined value Vref1 from the comparator OP2, the switch signal output unit 512 outputs the switching signal Sz in order to make the switch element S1 conductive. When receiving notice that the voltage V13 is smaller than the predetermined value Vref2 from the comparator OP3, the switch signal output unit 513 stops the output of the switching signal Sy in order to stop the inverter 3.

It is to be noted that the DC power supplies E21, E22, and E31 to E33 may be a common power supply or may be different power supplies.

In the example of Fig. 5, the potential of the other end 411 with respect to the one end 412 on the side close to the inverter 3 of the shunt resistor 41 is detected as the voltage V11 across the shunt resistor 41. However, the present invention is not limited to this, and a reverse configuration may be employed. This is similar to the description with reference to Fig. 4, and therefore redundant description will be omitted.

### <Clamp Circuit>

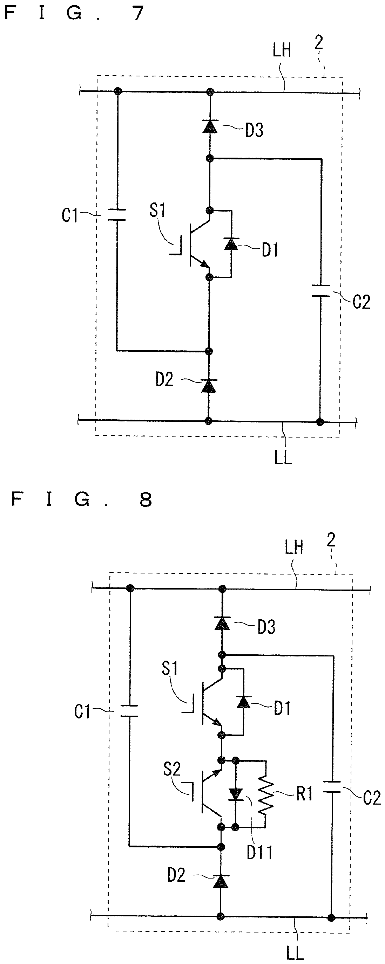

As shown in Fig. 7, compared to the clamp circuit 2 of Fig. 1, a clamp circuit 2 may further includes a capacitor C2 and diodes D2 and D3. A diode D1 and capacitors C1 and C2 are connected in series with each other between power lines LH and LL. In this series path, the diode D1 has an anode on a side close to the power line LH, and is provided between the capacitors C1 and C2. Additionally, in this series path, the capacitor C1 is provided on a side close to the power line LH with respect to the diode D 1. The diode D2 is provided between a connecting point between the capacitor C1 and the diode D1, and the power line LL. The diode D2 has an anode on a side close to the power line LL. The diode D3 is provided between a connecting point between the capacitor C2 and the diode D1, and the power line LH. The diode D3 has a cathode on a side close to the power line LH.

According to this clamp circuit, when the switch element S1 is made non-conductive, the capacitors C1 and C2 are charged while being connected in series with each other, and discharge while being connected in parallel with each other. According to this clamp circuit 2, for example, the capacitors C1 and C2 perform charge and discharge in accordance with the load power factor of the inductive load 6, as described in Patent Document 1. However, even in the clamp circuit 2 of Fig. 7, when load power factor reduces, the DC voltage increases. Accordingly, also in the clamp circuit 2 of Fig. 7, when the switch element S1 is made conductive with a fact that the regenerative current is larger than the predetermined value Iref1 as a trigger, the capacitors C1 and C2 can discharge when the power running current flows, and therefore it is possible to suppress increase in a DC voltage.

In an example of Fig. 8, compared to the clamp circuit 2 of Fig. 7, a resistor R1 and a switch element S2 are further provided. In a series path with the capacitors C1 and C2 and a diode D1, the resistor R1 is connected in series with the diode D1 between the capacitors C1 and C2. Additionally, in a series body of the diode D1 and the resistor R1 is sandwiched between the diodes D2 and D3. The switch element S2 is, for example, an insulated gate bipolar transistor, and is connected in parallel with the resistor R1. The switch element S2 is also controlled by the switching controller 51.

The resistor R1 is present in a charge path of the capacitors C1 and C2, namely the above series path, and therefore, it is possible to reduce an inrush current that flows into the capacitors C1 and C2 at the time of activation, for example. For example, also when AC voltages applied to the AC lines Pr, Ps and Pt instantaneously reduce, and thereafter recover, the inrush current can flow to the capacitors C1 and C2. However, the resistor R1 can reduce this inrush current. On the other hand, in the case where a regenerative current flows to the capacitors C1 and C2, a DC voltage between the power lines LH and LL increases by an amount of voltage drop in the resistor R1. Accordingly, the switch element S2 may be also made conductive with a fact that the regenerative current is larger than the predetermined Iref1 as a trigger. Consequently, the regenerative current flows while avoiding the resistor R1, and therefore it is possible to avoid increase in the DC voltage due to the voltage drop of the resistor R1. Accordingly, when both the switch elements S1 and S2 are made conductive, increase in the DC voltage can be most suppressed. Additionally, the resistor R1 is short-circuited, so that a current does not flow through the resistor R1. Therefore, it is possible to suppress the heat generation of the resistor R1, and to minimize the power capacity of the resistor R1.

In the example of Fig. 8, the resistor R1 is further provided with a diode D11 connected in parallel. The diode D11 has an anode on a side close to the power line LL in the charge path of the capacitors C1 and C2. This is because a case where the switch element S2 does not allow a current to flow in a forward direction of the diode D11 is assumed. That is, in order to make the capacitors C1 and C2 to function as smoothing capacitors, it is necessary to bidirectionally perform the charge and discharge of the capacitors C1 and C2. However, in the example of Fig. 8, the switch element S2 is made conductive only in one direction, and therefore conduction in a reverse direction can be realized by the diode D11. Accordingly, for example, when the switch element S2 is a bidirectional switch, the diode D11 is unnecessary.

In the normal operation of the inductive load 6, the switch element S2 should be made non-conductive. For example, a relatively high DC voltage is sometimes applied to the power lines LH and LL by the converter 1, due to the fluctuation of the AC voltages of the AC line Pr, Ps and Pt, as described in Patent Document 1. This is because, in this case, while a large current flows through the capacitors C1 and C2 and there is a possibility of overcurrent stop, the resistor R1 can reduce such a current.

### <Non-conductive of Switch Element S1>

In the power conversion device shown in each of Figs. 7 and 8, voltages across the capacitors C1 and C2 when the switch element S1 is non-conductive are determined on the basis of, for example, a load power factor, as shown in the Patent Document 1. The capacitors C1 and C2 perform the charge and discharge in accordance with the load power factor, so that the smaller the load power factor is, the higher the voltages across the capacitors C1 and C2 are.

On the other hand, the smaller the load power factor is, the larger a maximum value of a regenerative current is. This can be understood from the following description with reference to Fig. 2. That is, the smaller the load power factor is, the larger a phase difference between a phase voltage and a line current is. Accordingly, the smaller the load power factor is, the longer the periods Hu1, Hu2, Hv1, Hv2, Hw1 and Hw2 are. For example, when the period Hu1 increases, an absolute value of the line current iu increases. In the period Hu1, the line current iu flows as the regenerative current, and therefore the absolute value of the line current iu and the maximum value of the regenerative current are equal to each other. Accordingly, the smaller the load power factor is, the larger the maximum value of the regenerative current is.

As described above, in accordance with the load power factor, the voltages across the capacitors C1 and C2 and the maximum value of the regenerative current are determined.

When the voltages across the capacitors C1 and C2 do not exceed a predetermined reference value, the switching controller 51 may make the switch element S1 non-conductive. That is, when the maximum value of the regenerative current in the predetermined period is smaller than a predetermined value Iref3 (≤ the predetermined value Iref1, see also Figs. 3 and 4), the switch element S1 may be made non-conductive. As the predetermined period, for example, in the case where the inverter 3 outputs a three-phase AC voltage, a period equal to or longer than 1/6 cycle of the three-phase AC voltage may be employed. As described with reference to Fig. 2, this is because in the 1/6 cycle (60 degree section), the period when the regenerative current flows (period Hu1, or the like) appears, and the maximum value of the regenerative current is taken in this period.

When the predetermined period is further generalized, in the case where n (n is an integer of equal to or above 2) phase AC voltage is outputted, a period equal to or longer than 1/(2n) cycle is simply employed as the predetermined period. Additionally, a maximum value of a regenerative current in a half cycle of an AC voltage may be detected without limiting the number of phases. This is because in the normal operation of the inductive load 6, the period when the power running current flows and the period when the regenerative current flows are alternately appear, the half cycle of the AC voltage includes the period when the regenerative current flows.

As described above, when the maximum value of the regenerative current in the predetermined period is smaller than the predetermined value Iref3 (≤ predetermined value Iref1), the switch element S1 is made non-conductive. Accordingly, at this time, the capacitors C1 and C2 can be made to function as a nonlinear clamp capacitor. Even at this time, the voltages across the capacitors C1 and C2 can be made to be equal to or less than the predetermined reference value. Furthermore, at this time, this power conversion device (the converter 1 and the inverter 3) can be made to function as a so-called indirect matrix converter. Although not shown in Fig. 1, an LC filter is provided on the input side of the converter 1 in this indirect matrix converter. In this indirect matrix converter, the converter 1 and the inverter 3 are appropriately controlled, so that it is possible to reduce a harmonic component of a current that is inputted to the LC filter. At this time, it is also possible to avoid the conduction loss of the switch element S 1.

Any factor may cause the regenerative current to flow. In short, the switch element S1 is simply made non-conductive, when a maximum value of a regenerative current in a period equal to or longer than the 1/(2n) cycle of an AC voltage is smaller than the predetermined value Iref3.

A value smaller than the predetermined value Iref1 may be employed as the predetermined value Iref3. Consequently, even when the maximum value of the regenerative current exceeds the predetermined value Iref3 just after the maximum value is below predetermined value Iref3, as long as the regenerative current does not exceed the predetermined value Iref1, the switch element S1 is not made conductive. Therefore, it is possible to reduce the number of times of switching of the switch element S1. Consequently, it is also possible to reduce the switching loss of the switch element S1. Additionally, after the lapse of the predetermined time from a time point when the maximum value of the regenerative current is below predetermined value Iref3, the switch element S1 may be made non-conductive. This is also control in consideration of a case where the switch element S1 is made conductive again due to the maximum value of the regenerative current exceeding the predetermined value Iref3 just after the regenerative current is below the predetermined value Iref3. That is, the number of times of the switch element S1 is reduced, and unnecessary control is avoided.

While the invention has been shown and described in detail, the foregoing description is in all aspects illustrative and not restrictive. It is therefore understood that numerous modifications and variations can be devised without departing from the scope of the invention.

### Description of Reference Signs

- 3: inverter
- 4: current detection unit
- 41: shunt resistor
- 51: switching controller
- C1: capacitor
- D1: diode
- S1: switch element

## Claims

1. A power conversion device comprising:
an inverter (3) converting a DC voltage applied between a first power line (LH) on a positive electrode side and a second power line (LL) on a negative electrode side into an AC voltage, and apply said AC voltage to an inductive load (6);
a capacitor (C1) provided between said first and said second power lines;
a diode (D1) connected in series with said capacitor between said first and said second power lines, and having an anode on a side close to said first power line in a series path with said capacitor;
a switch element (S1) connected in parallel with said diode;
a current detection unit (4) detecting a regenerative current that flows from said first power line to said second power line via said capacitor; and
a switching controller (51) having a function of controlling said inverter and said switch element,
**characterized in that**:
the switching controller (51) further has a function of making said switch element conductive when said regenerative current is larger than a predetermined value (Iref1) as a trigger, in a state where said inverter applies said AC voltage to said inductive load.

2. The power conversion device according to claim 1, wherein
said current detection unit (4) is configured to detect a current that flows through said first or said second power line (LH, LL) while defining a direction in which said regenerative current flows as a negative direction, and add a predetermined offset amount (ΔI) having a positive value to detected said current, to output added said current to said switching controller, and
said switching controller (51) is configured to make said switch element conductive when said current from said current detection unit is smaller than a second predetermined value (Iref11) that is a difference between said predetermined offset amount and said predetermined value (Iref1) as a trigger.

3. The power conversion device according to claim 2, wherein
said switching controller (51) is configured to stop said inverter when said current from said current detection unit is larger than a third predetermined value (Iref21) larger than said predetermined offset amount (ΔI) as a trigger.

4. The power conversion device according to claim 1, wherein
said current detection unit (4) is configured to detect a current that flows through said first or said second power line (LH, LL) while defining a direction in which said regenerative current flows as a positive direction, and add a predetermined offset amount (ΔI) having a positive value to detected said current, to output added said current to said switching controller, and
said switching controller (51) is configured to make said switch element conductive when said current from said current detection unit is larger than a second predetermined value (Iref11) which is a sum of said predetermined offset amount and said predetermined value (Iref1) as a trigger.

5. The power conversion device according to claim 4, wherein
said switching controller (51) is configured to stop said inverter when said current from said current detection unit is smaller than a third predetermined value (Iref21) smaller than said predetermined offset amount (ΔI) as a trigger.

6. The power conversion device according to any one of claims 2 to 5, wherein
said current detection unit (4) has a shunt resistor (41) provided in said first or second power line (LH, LL), and is configured to detect a potential of other end with respect to a potential of one end of said shunt resistor as a current that flows through said first or said second power line, and add said predetermined offset amount to said current by detecting said potential of said other end with respect to a potential smaller than said potential of said one end of said shunt resistor.

7. The power conversion device according to any one of claims 1 to 6, further comprising:
a second capacitor (C2) connected in series with said capacitor and said diode in said series path;
a second diode (D2) provided between a point between said capacitor and said diode, and said second power line, and having an anode on a side close to said second power line; and
a third diode (D3) provided between a point between said second capacitor and said diode, and said first power line, and having a cathode on a side close to said first power line, wherein
said switching controller (51) is configured to make said switch element non-conductive, when a maximum value of said regenerative current in a period equal to or longer than a period obtained by dividing a cycle of said AC voltage by a product of the number of output phases of said inverter and 2 is smaller than a fourth predetermined value which is equal to or less than said predetermined value.

## Patentansprüche

1. Leistungsumwandlungsvorrichtung, umfassend:
einen Wechselrichter (3), der eine zwischen einer ersten Stromleitung (LH) auf einer positiven Elektrodenseite und einer zweiten Stromleitung (LL) auf einer negativen Elektrodenseite angelegte DC-Spannung in eine AC-Spannung umwandelt, und die AC-Spannung an eine induktive Last (6) anlegt;
einen Kondensator (C1), der zwischen der ersten und der zweiten Stromleitung vorgesehen ist;
eine Diode (D1), die in Reihe mit dem Kondensator zwischen der ersten und der zweiten Stromleitung verbunden ist und die eine Anode auf einer Seite nahe der ersten Stromleitung in einem Reihenpfad mit dem Kondensator aufweist;
ein Schaltelement (S1), das parallel mit der Diode verbunden ist;
eine Stromerfassungseinheit (4), die einen regenerativen Strom, der von der ersten Stromleitung zu der zweiten Stromleitung über den Kondensator fließt, erfasst; und
eine Schaltsteuervorrichtung (51), die eine Funktion des Steuerns des Wechselrichters und des Schaltelements aufweist,
**dadurch gekennzeichnet, dass**:
die Schaltsteuervorrichtung (51) weiter eine Funktion aufweist, die das Schaltelement leitfähig macht, wenn der regenerative Strom größer als ein vorbestimmter Wert (Iref1) als ein Auslöser ist, in einem Zustand, in dem der Wechselrichter die AC-Spannung an die induktive Last anlegt.

2. Leistungsumwandlungsvorrichtung nach Anspruch 1, wobei
die Stromerfassungseinheit (4) konfiguriert ist, um einen Strom zu erfassen, der durch die erste oder die zweite Stromleitung (LH, LL) fließt, während eine Richtung, in der der regenerative Strom fließt, als eine negative Richtung definiert ist, und um einen vorbestimmten Versatzbetrag (ΔI), der einen positiven Wert aufweist, hinzuzufügen, um den Strom zu erfassen, um den zugefügten Strom zu der Schaltsteuervorrichtung auszugeben, und
die Schaltsteuervorrichtung (51) konfiguriert ist, um das Schaltelement leitfähig zu machen, wenn der Strom von der Stromerfassungseinheit kleiner als ein zweiter vorbestimmter Wert (Iref1 1) ist, der eine Differenz zwischen dem vorbestimmten Versatzbetrag und dem vorbestimmten Wert (Iref1) als ein Auslöser ist.

3. Leistungsumwandlungsvorrichtung nach Anspruch 2, wobei
die Schaltsteuervorrichtung (51) konfiguriert ist, um den Wechselrichter zu stoppen, wenn der Strom von der Stromerfassungseinheit größer als ein dritter vorbestimmter Wert (Iref2 1) ist, der größer als der vorbestimmte Versatzbetrag (ΔI) als ein Auslöser ist.

4. Leistungsumwandlungsvorrichtung nach Anspruch 1, wobei
die Stromerfassungseinheit (4) konfiguriert ist, um einen Strom zu erfassen, der durch die erste oder die zweite Stromleitung (LH, LL) fließt, während eine Richtung, in der der regenerative Strom fließt, als eine positive Richtung definiert ist, und um einen vorbestimmten Versatzbetrag (ΔI), der einen positiven Wert aufweist, hinzuzufügen, um den Strom zu erfassen, um den zugefügten Strom zu der Schaltsteuervorrichtung auszugeben, und
die Schaltsteuervorrichtung (51) konfiguriert ist, um das Schaltelement leitfähig zu machen, wenn der Strom von der Stromerfassungseinheit größer als ein zweiter vorbestimmter Wert (Iref1 1) ist, der eine Summe von dem vorbestimmten Versatzbetrag und dem vorbestimmten Wert (Iref1) als ein Auslöser ist.

5. Leistungsumwandlungsvorrichtung nach Anspruch 4, wobei
die Schaltsteuervorrichtung (51) konfiguriert ist, um den Wechselrichter zu stoppen, wenn der Strom von der Stromerfassungseinheit kleiner als ein dritter vorbestimmter Wert (Iref2 1) ist, der kleiner als der vorbestimmte Versatzbetrag (ΔI) als ein Auslöser ist.

6. Leistungsumwandlungsvorrichtung nach einem der Ansprüche 2 bis 5, wobei
die Stromerfassungseinheit (4) einen Nebenschlusswiderstand (41) aufweist, der in der ersten oder der zweiten Stromleitung (LH, LL) vorgesehen ist, und die konfiguriert ist, um ein Potential eines anderen Endes in Bezug auf ein Potential eines Endes des Nebenschlusswiderstands zu erfassen, wenn ein Strom durch die erste oder die zweite Stromleitung fließt, und um den vorbestimmten Versatzbetrag zu dem Strom hinzuzufügen, durch Erfassen des Potentials des anderen Endes in Bezug auf ein Potential, das kleiner als das Potential des einen Endes des Nebenschlusswiderstands ist.

7. Leistungsumwandlungsvorrichtung nach einem der Ansprüche 1 bis 6, weiter umfassend:
einen zweiten Kondensator (C2), der in Reihe mit dem Kondensator und der Diode in dem Reihenpfad verbunden ist;
eine zweite Diode (D2), die zwischen einem Punkt zwischen dem Kondensator und der Diode und der zweiten Stromleitung vorgesehen ist und die auf einer Seite nahe der zweiten Stromleitung eine Anode aufweist; und
eine dritte Diode (D3), die zwischen einem Punkt zwischen dem zweiten Kondensator und der Diode und der ersten Stromleitung vorgesehen ist und die auf einer Seite nahe der ersten Stromleitung eine Kathode aufweist, wobei
die Schaltsteuervorrichtung (51) konfiguriert ist, um das Schaltelement nichtleitend zu machen, wenn ein maximaler Wert des regenerativen Stroms in einem Zeitraum gleich wie oder länger als ein Zeitraum, der durch Dividieren eines Zyklus der AC-Spannung durch ein Produkt der Anzahl von Ausgangsphasen des Wechselrichters und erhalten wird, kleiner als ein vierter vorbestimmter Wert ist, der gleich wie oder geringer als der vorbestimmte Wert ist.

## Revendications

1. Dispositif de conversion électrique comprenant :
un onduleur (3) convertissant une tension CC appliquée entre une première ligne électrique (LH) sur un côté d'électrode positif et une seconde ligne électrique (LL) sur un côté d'électrode négatif en une tension CA, et appliquant de ladite tension CA à une charge inductive (6) ;
un condensateur (C1) prévu entre lesdites première et seconde lignes électriques ;
une diode (D1) connectée en série avec ledit condensateur entre lesdites première et seconde lignes électriques, et ayant une anode sur un côté proche de ladite première ligne électrique dans un trajet en série avec ledit condensateur;
un élément de commutation (S1) connecté en parallèle avec ladite diode ;
une unité de détection de courant (4) détectant un courant de régénération qui circule depuis ladite première ligne électrique vers ladite seconde ligne électrique via ledit condensateur ; et
un dispositif de commande de commutation (51) ayant une fonction consistant à commander ledit onduleur et ledit élément de commutation,
**caractérisé en ce que** :
le dispositif de commande de commutation (51) a en outre une fonction consistant à rendre ledit élément de commutation conducteur lorsque ledit courant de régénération est supérieur à une valeur prédéterminée (Iref1) en tant que déclencheur, dans un état où ledit onduleur applique ladite tension CA à ladite charge inductive.

2. Dispositif de conversion électrique selon la revendication 1, dans lequel
ladite unité de détection de courant (4) est configurée pour détecter un courant qui circule à travers ladite première ou ladite seconde ligne électrique (LH, LL) tout en définissant une direction dans laquelle ledit courant de régénération circule en tant que direction négative, et ajouter une quantité de décalage prédéterminée (ΔI) ayant une valeur positive audit courant détecté, pour émettre en sortie ledit courant ajouté vers ledit dispositif de commande de commutation, et
ledit dispositif de commande de commutation (51) est configuré pour rendre ledit élément de commutation conducteur lorsque ledit courant provenant de ladite unité de détection de courant est inférieur à une deuxième valeur prédéterminée (Iref11) qui est une différence entre ladite quantité de décalage prédéterminée et ladite valeur prédéterminée (Iref1) en tant que déclencheur.

3. Dispositif de conversion électrique selon la revendication 2, dans lequel
ledit dispositif de commande de commutation (51) est configuré pour arrêter ledit onduleur lorsque ledit courant provenant de ladite unité de détection de courant est supérieur à une troisième valeur prédéterminée (Iref21) supérieure à ladite quantité de décalage prédéterminée (ΔI) en tant que déclencheur.

4. Dispositif de conversion électrique selon la revendication 1, dans lequel
ladite unité de détection de courant (4) est configurée pour détecter un courant qui circule à travers ladite première ou ladite seconde ligne électrique (LH, LL) tout en définissant une direction dans laquelle ledit courant de régénération circule en tant que direction positive, et ajouter une quantité de décalage prédéterminée (ΔI) ayant une valeur positive audit courant détecté, pour émettre en sortie ledit courant ajouté vers ledit dispositif de commande de commutation, et
ledit dispositif de commande de commutation (51) est configuré pour rendre ledit élément de commutation conducteur lorsque ledit courant provenant de ladite unité de détection de courant est supérieur à une deuxième valeur prédéterminée (Iref11) qui est une somme de ladite quantité de décalage prédéterminée et ladite valeur prédéterminée (Iref1) en tant que déclencheur.

5. Dispositif de conversion électrique selon la revendication 4, dans lequel
ledit dispositif de commande de commutation (51) est configuré pour arrêter ledit onduleur lorsque ledit courant provenant de ladite unité de détection de courant est inférieur à une troisième valeur prédéterminée (Iref21) inférieure à ladite quantité de décalage prédéterminée (ΔI) en tant que déclencheur.

6. Dispositif de conversion électrique selon l'une quelconque des revendications 2 à 5, dans lequel
ladite unité de détection de courant (4) a une résistance shunt (41) prévue dans ladite première ou seconde ligne électrique (LH, LL), et est configurée pour détecter un potentiel de l'autre extrémité par rapport à un potentiel d'une première extrémité de ladite résistance shunt en tant que courant qui circule à travers ladite première ou ladite seconde ligne électrique, et ajouter ladite quantité de décalage prédéterminée audit courant en détectant ledit potentiel de ladite autre extrémité par rapport à un potentiel inférieur audit potentiel de ladite première extrémité de ladite résistance shunt.

7. Dispositif de conversion électrique selon l'une quelconque des revendications 1 à 6, comprenant en outre :
un second condensateur (C2) connecté en série avec ledit condensateur et ladite diode dans ledit trajet en série ;
une deuxième diode (D2) prévue entre un point entre ledit condensateur et ladite diode, et ladite seconde ligne électrique, et ayant une anode sur un côté proche de ladite seconde ligne électrique ; et
une troisième diode (D3) prévue entre un point entre ledit second condensateur et ladite diode, et ladite première ligne électrique, et ayant une cathode sur un côté proche de ladite première ligne électrique, dans lequel
ledit dispositif de commande de commutation (51) est configuré pour rendre ledit élément de commutation non conducteur, lorsqu'une valeur maximale dudit courant de régénération pendant une période égale ou supérieure à une période obtenue en divisant un cycle de ladite tension CA par un produit du nombre de phases de sortie dudit onduleur et est inférieure à une quatrième valeur prédéterminée qui est égale ou inférieure à ladite valeur prédéterminée.
